# EUROPÄISCHE PATENTANMELDUNG

(11) **EP 1 669 885 A2**
(43) Veröffentlichungstag der Anmeldung: **14.06.2006**
(21) Anmeldenummer: 05008631.3
(22) Anmeldetag: 07.02.1998
(51) Int. Cl.: G06F 15/76

(54) **Verfahren zur Selbstsynchronisation von konfigurierbaren Elementen eines programmierbaren Bausteines**

(30) Priorität: 08.02.1997 DE 19704728
(62) Teilanmeldung aus: 98909346.3
(71) Anmelder: PACT XPP Technologies AG, 80939 München (DE)
(72) Erfinder: Vorbach, Martin, 67360 Lingenfeld (DE); Münch, Robert, 76135 Karlsruhe (DE)
(74) Vertreter: Pietruk, Claus Peter

(57) **Zusammenfassung**

Die Erfindung betrifft ein Verfahren zur Synchronisation der Datenverarbeitung zur Laufzeit konfigurierbarer, datenverarbeitender Elemente einer zur Laufzeit rekonfigurierbaren Zellarchitektur mit den Schritten, dass zumindest einige der Elemente konfiguriert werden, ein in einer Zelle erzeugtes Triggersignal zur Laufzeit zu einer Anzahl konfigurierter Elemente innerhalb der Zellarchitektur übertragen wird, das Triggersignal von der Anzahl der Elemente empfangen wird und im Ansprechen auf den Triggerempfang anhand dessen die Ausführung einer Konfiguration zur Datenverarbeitung bestimmt wird

## Beschreibung

### 1. Hintergrund der Erfindung

### 1.1 Stand der Technik

### 1.1.1 Probleme

Bei heutigen Bausteinen (FPGA, DPGA etc.) wird die Synchronisation der konfigurierbaren Elemente meistens durch den Takt des Bausteines hergestellt. Diese Art der zeitlich gesteuerten Synchronisation bereitet viele Probleme, da oft nicht im Vorhinein bekannt ist, wie lange eine Aufgabe benötigt, bis ein gültiges Ergebnis bereit steht. Ein weiteres Problem der zeitgesteuerten Synchronisation ist, daß das Ereignis auf welches die Synchronisation erfolgt nicht von dem zu synchronisierenden Element selbst ausgelöst wird, sondern von einem unabhängigem Element. In diesem Fall sind nun zwei verschiedene Elemente an der Synchronisation beteiligt. Dies führt zu einem erheblich höhrem Verwaltungsaufwand.
Aus EP-A-0,726,532 ist ein Verfahren zur Steuerung des Datenflußes in, aus mehreren als Array angeordneten Prozessoren bestehenden, SIMD-Maschinen bekannt. Dabei wird eine Instruktion an alle Prozessoren gesendet, die dynamisch den Zielprozessor einer Datenübertragung auswählt. Die Instruktion wird von einer übergeordneten Instanz an alle Prozessoren (broadcast instruction)gesendet und besteht aus einem Richtungsfeld (destination field) und einem Zielfeld (target field). Das Richtungsfeld steuert eine Einheit im Prozessorelement, um dynamisch das Nachbar-Prozessorelement zu ermitteln, zu dem das Ergebnis gesendet werden soll. Mit dem Zielfeld wird dynamisch das Operandenregister eines weiteren Prozessorelements ausgewählt, in welchem ein weiteres Ergebnis gespeichert werden soll.

### 1.1.2 Verbesserung durch die Erfindung

Durch die Erfindung wird ein Verfahren beschrieben, welches es gestattet, daß die Synchronisation von zu synchronisierenden Elementen selbst ausgeht. Die Synchronisation ist nicht mehr durch eine zentrale Instanz implementiert und wird auch nicht mehr durch eine zentrale Instanz verwaltet. Durch die Verlegung der Synchronisation in jedes Element können auch viel mehr Synchronisationsaufgaben gleichzeitig durchgeführt werden, da unabhängige Elemente sich nicht mehr gegenseitig beim Zugriff auf die zentrale Synchronisations-Instanz behindern. Die Einzelheiten und besondere Ausgestaltungen, sowie Merkmale des erfindungsgemäßen Synchronisationsverfahrens sind Gegenstand der Patentansprüche.

### 2. Beschreibung der Erfindung

### '2.1 Übersicht über die Erfindung, Abstrakt

In einem Baustein (DFP, DPGA) mit zwei- oder mehrdimensional angeordneter, programmierbarer Zellstruktur kann jedes konfigurierbare Element über eine Vernetzungsstruktur auf die Konfigurations- und Statusregister der anderen konfigurierbaren Elemente zugreifen und damit deren Funktion und Arbeitsweise aktiv beeinflussen. Eine Matrix aus derartigen Zellen wird im Folgenden ProcessingArray (PA) genannt. Die Konfiguration kann somit zusätzlich zu der üblichen Methode durch eine Ladelogik, aus dem ProcessingArray (PA) heraus erfolgen.

### 2.2 Detailbeschreibung der Erfindung

Es wird von einem frei zur Laufzeit programmierbaren Baustein ausgegangen, welcher zusätzlich zur Laufzeit rekonfiguriert werden kann. Die auf dem Chip enthaltenen konfigurierbaren Elemente besitzen ein oder mehrere Konfigurationsregister für verschiedene Aufgaben. Auf diese Konfigurationsregister kann lesend wie schreibend zugegriffen werden. In dem beschriebenen Verfahren wird davon ausgegangen, daß für folgende Informationen eine Konfiguration in einem zu konfigurierenden Element eingestellt werden kann.
- Vernetzungs-Register. In diesem Register wird die Art der Verbindung zu anderen Zellen eingestellt.
- Befehls-Register. In diesem Register wird die auszuführende Funktion des konfigurierbaren Elements eingetragen.
- Status-Register. In diesem Register speichert die Zelle ihren aktuellen Zustand. Dieser Zustand gibt anderen Elementen des Bausteins Auskunft darüber, in welchem Verarbeitungszyklus sich die Zelle befindet.
Eine Zelle wird durch einen Befehl konfiguriert, welcher die Funktion der Zelle bestimmt, die ausgeführt werden soll. Weiterhin werden Konfigurationsdaten eingetragen um die Vernetzung mit anderen Zellen und den Inhalt des Status-Registers einzustellen. Nach diesem Vorgang ist die Zelle betriebsbereit.

Um eine flexible und dynamische Zusammenarbeit vieler Zellen zu ermöglichen, kann jede Zelle auf alle Konfigurationsregister einer anderen Zelle lesend oder schreibend zugreifen. Auf welches der vielen Konfigurationsregister lesend oder schreibend zugegriffen wird, wird durch die Art des Befehls, mit welchem die Zelle konfiguriert wurde, festgelegt. Jeder Befehl den die Zelle ausführen kann, existiert in soviel verschiedenen Adressierungsarten, wie es verschiedene, voneinander unabhängige Konfigurationsregister, in einem zu konfigurierenden Element gibt.

Beispiel: Eine Zelle besitzt die oben angegebenen Konfigurationsregister (Vernetzung, Befehl und Status) und soll den Befehl ADD, welcher eine Addition durchführt ausführen. Durch die verschiedenen Arten des ADD Befehls kann nun selektiert werden, wohin das ergebnis dieser Funktion übertragen wird.
ADD-A. Das Ergebnis wird an das Operand-Register-A der Zielzelle übertragen.
ADD-B. Das Ergebnis wird an das Operand-Register-B der Zielzelle übertragen.
ADD-V. Das Ergebnis wird an das Vernetzungs-Register der Zielzelle übertragen.
ADD-S. Das Ergebnis wird an das Status-Register der Zielzelle übertragen.
ADD-C. Das Ergebnis wird an das Befehls-Register der Zielzelle übertragen.

### 2.2.1 Steuer- und Synchonisations Trigger

Neben dem Ergebnis kann jede Zelle eine Menge an TriggerSignalen erzeugen. Die Trigger-Signale müssen nicht notwendigerWeise an die gleiche Zielzelle übertragen werden, wie das Ergebnis der Verarbeitung des konfigurierten Befehles. Ein Trigger-Signal oder erst die Kombination mehrerer Trigger-Signale, lößt bei der Zielzelle eine bestimmte Aktion aus oder setzt die Zelle in einen bestimmten Zustand. Eine Beschreibung der Zustände ist weiter unten im Text zu finden. Folgende Trigger-Signale gibt es:
- GO-Trigger. Der GO-Trigger setzt die Zielzelle in den Zustand READY.
- RECONFIG-Trigger. Der RECONFIG-Trigger setzt die Zielzelle in den Zustand RECONFIG, so daß die Zelle umprogrammiert werden kann. Besonders in Zusammenarbeit mit Switching-Tabellen ist dieser Trigger sehr sinnvoll. Geht man davon aus, daß zu verarbeitenden Daten mit der steigenden Taktflanke in die Operanden-Register geladen werden, in der Zeitspanne des H-Level verarbeitet werden und mit der fallenden Flanke in das Ausgangsregister geschrieben werden, so ist eine Rekonfigurierung der Zelle mit der fallenden Flanke möglich. Mit der fallenden Flanke werden die neuen Konfigurationsdaten in das Befehls-Register geschrieben. Die Zeitspanne des L-Level ist ausreichend genug, um die Rekonfigurierung erfolgreich abzuschließen.
- STEP-Trigger. Der STEP-Trigger lößt bei der Zielzelle, welche sich im Zustand WAIT befindet, die einmalige Ausführung des konfigurierten Befehls aus.
- STOP-Trigger. Der STOP-Trigger hält die Zielzelle an, in dem die Zelle in den Zustand STOP gesetzt wird.

Durch die Möglichkeit in der verarbeitenden Zelle anzugeben, in welches Register der Zielzelle das Ergebnis eingetragen werden soll und welche Art von Trigger-Signal erzeugt werden soll, kann aus einem Datenstrom eine Menge an Verwaltungsdaten erzeugt werden. Diese Verwaltungsdaten stellen kein Ergebnis der eigentlichen Aufgabe dar, welche durch den Chip abgearbeitet werden soll, sondern dienen allein der Verwaltung, Synchronistion, Optimierung etc. des internen Zustands.

Jede Zelle kann folgende Zustände annehmen, welche durch eine geeignete Kodierung im Status-Register dargestellt werden.
- READY. Die Zelle ist mit einem gültigen Befehl konfiguriert worden und kann Daten verarbeiten. Die Verarbeitung findet mit jedem Taktzyklus statt. Die Daten werden auf Grund der Adressierungsart der datenschickenden Zelle in die Register der Zielzelle eingelesen.
- WAIT. Die Zelle ist mit einem gültigen Befehl konfiguriert worden und kann Daten verarbeiten. Die Verarbeitung findet mit auf Grund eines Trigger-Signals statt, welches durch andere Elemente des Bausteins erzeugt werden können. Die Daten werden auf Grund der Adressierungsart der datenschickenden Zelle in die Register der Zielzelle eingelesen.
- CONFIG. Die Zelle ist nicht mit einem gültigen Befehl konfiguriert. Das Datenpaket, welches mit dem nächsten Taktzyklus an die Zelle gesandt wird, wird in das Befehls-Register eingelesen. Das Datenpaket wird auf jeden Fall in das Befehls-Register eingelesen, egal welche Adressierungsart von der datenschickenden Zelle benutzt wurde.
- CONFIG-WAIT. Die Zelle ist nicht mit einem gültigen Befehl konfiguriert. Ein Datenpaket, wird mit dem nächsten Trigger-Signal, welches durch andere Elemente des Bausteins erzeugt werden kann, eingelesen und in das Befehls-Register geschrieben. Das Datenpaket wird auf jeden Fall in das Befehls-Register eingelesen, egal welche Adressierungsart von der datenschickenden Zelle benutzt wurde.
- RECONFIG. Die Zelle ist mit einem gültigen Befehl konfiguriert, verarbeitet aber keine weiteren Daten, nimmt die Daten auch nicht an. Die Zelle kann durch ein anderes Element des Bausteins umkonfiguriert werden.
- STOP. Die Zelle ist mit einem gültigen Befehl konfiguriert, verarbeitet aber momentan keine Daten. Die Daten werden von der Zelle angenommen (in die Eingangsregister übertragen), aber nicht weiterverarbeitet.

Durch diese verschiedenen Zustände und der Möglichkeit auf die verschiedene Register einer Zelle schreibend und lesend zuzugreifen, kann jede Zelle eine aktive Verwaltungsrolle einnehmen. Im Gegensatz dazu besitzen alle existierenden Bausteine dieser Art eine zentrale Verwaltungsinstanz, welche immer den gesamten Zustand des Bausteins kennen und handhaben muß.

Um eine weitere Flexibilität zu erreichen gibt es eine weitere Klasse an Befehlen, die nach der ersten Ausführung ihre Art wechseln. Bezogen auf des Beispiel des ADD-Befehls sieht ein Befehl dann so aus:
- ADD-C-A. Das Ergebnis der ADD Funktion wird bei der ersten Ausführung des Befehls in das Befehls-Register der Zielzelle geschrieben. Bei jeder weiteren Ausführung wird das Ergebnis in das Operand-Register-A geschrieben.

Diese Möglichkeit kann beliebig erweitert werden, so daß auch Befehle der Art ADD-C-V-A-C-...-B denkbar sind. Jeder Befehl kann alle permutierten Kombinationen der verschiedenen Adressierungs- und Trigger-Arten annehmen.

### 2.2.2 Rekonfigurationssteuerung mittels RECONFIG-Trigger:

Im bisherigen Verfahren war es notwendig, daß jedes zu konfigurierendes Element von einer externen Instanz einen RECONFIG-Trigger erhalten mußte, um in den Zustand 'rekonfigurierbar' überzugehen. Dies hat den Nachteil, daß für die Verteilung des RECONFIG-Triggers ein erheblicher Vernetzungsaufwand und Konfigurationsaufwand erforderlich war.

Durch die Strukutur der Vernetzung, kann dieser Nachteil beseitigt werden. Alle konfigurierbaren Elemente, welche durch die Vernetzungsinformation zusammenhängen, stellen einen gerichteten Graphen dar. Ein solcher Graph kann mehrere Wurzeln (Quellen) und mehrere Blätter (Ziele) haben. Die konfigurierbaren Elemente werden so erweitert, daß sie einen eingehenden RECONFIG-Trigger entweder in Richtung ihrer ausgehenden Register, eingehenden Register, oder einer Kombinataion derer, propagieren. Durch diese Propagierung erhalten alle direkt mit dem konfigurierbaren Element verbundenen konfigurierbaren Elemente ebenfalls den RECONFIG-Trigger.

Eine Konfiguration (Graph) kann nun komplett in den Zustand 'rekonfigurierbar' gebracht werden, in dem entweder an alle Wurzeln ein RECONFIG-Trigger geschickt wird und diese den RECONFIG-Trigger in Richtung der Ausgangsregister propagieren. Die Menge der Wurzeln in einem Graph, an die ein RECONFIG-Trigger geschickt werden muß, ist erheblich kleiner, als die Menger aller Knoten des Graphen. Dadurch wird eine erhebliche Minimierung des Aufwandes erreicht. Selbstverständlich kann ein RECONFIG-Trigger auch an alle Blätter geschickt werden. Der RECONFIG-Trigger wird in diesem Fall in Richtung der Eingangsregister propagiert.

Durch den Einsatz beider Möglichkeiten oder einer Mischung beider Verfahren, kann die minimale Menge an konfigurierbaren Elementen berechnet werden, an die ein RECONFIG-Trigger herangeführt werden muß.

Die konfigurierbaren Elemente können einen Zusatz zu ihrem Status-Register bekommen, der angibt, ob ein eingehender RECONFIG-Trigger propagiert werden soll oder nicht. Diese Information wird dann benötigt, wenn zwei oder mehr verschiedene Graphen an ein oder mehreren Stellen zusammen hängen (also einen Übergang haben) und es nicht gewünscht ist, daß auch einer der anderen Graphen in den Zustand 'rekonfigurierbar' übergeht. Ein oder mehrere konfigurierbare Elemente verhalten sich also wie eine Schleuse.

Weiterhin kann das Status-Register derart erweitert werden, daß ein zusätzlicher Eintrag angibt, in welche Richtung ein eingehender RECONFIG-Trigger weitergegeben werden soll.

Das beschriebene Verfahren, kann auf alle Arten von Triggern und/oder Daten angewandt werden. Es kann dadurch eine automatische
Verteilungshierarchie hergestellt werden, welche sehr wenige Zugriffsmöglichkeiten von außen benötigt, um diese in Gang zu setzen.

### 3. Implementierung mehrer Funktionen gleichzeitig in denselben konfigurierbaren Elementen

### 3.1 Grundfunktion und benötigte Trigger

Eine besonders komplexe Variante des Aufrufes verschiedener Macros durch eine Bedingung wird im Folgenden vorgestellt:
Bei der Ausführung einer Bedingung (IF *COMP* THEN A ELSE B; wobei COMP ein Vergleich darstellt, A und B auszuführende Operationen sind) werden keine GO- und STOP-Trigger generiert. Statt dessen wird ein Triggervektor (TRIGV) generiert, der angibt, zu welchem Ergebnis der Vergleich COMP geführt hat. Der Triggervektor kann daher die Zustände "gleich", "größer" oder "kleiner" annehmen.
Der Vektor wird an eine nachfolgende Zelle gesandt, die anhand des Zustandes des Vektors genau ein bestimmtes Konfigurationsregister (entsprechend A oder B) aus einer Mehrzahl von Konfigurationsregistern auswählt. Dadurch wird erreicht, daß je nach Ergebnis des vorangegangenen Vergleiches eine andere Funktion über die Daten durchgeführt wird.
Zustände wie "größer-gleich", "kleiner-gleich", "gleichungleich" werden aufgelöst, indem zwei Konfigurationsregister mit denselben Konfigurationsdaten beschrieben werden. Beispielsweise wird bei "größer-gleich" das Konfigurationsregister "größer" und das Konfigurationsregister "gleich" mit demselben Konfigurationswort beschrieben, während das Konfigurationsregister "kleiner" ein anderes Konfigurationswort enthält.

Bei der Implementierung der Triggervektoren (TRIGV) ist keine Begrenzung auf die Zustände "größer", "kleiner" und "gleich" erforderlich. Zur Auswertung von großen "CASE ... OF" Konstrukten kann eine beliebige Zahl n, die den Zustand des CASE repräsentiert, als Triggervektor (TRIGV-m) zu der oder den nachfolgen Zellen weitergeleitet werden. Mit anderen Worten gibt n den Vergleich innerhalb des CASE an, der bei Auswertung der anliegenden Daten zugetroffen hat. Zur Ausführung der innerhalb des CASE dem Vergleich zugeordneten Funktion wird n an die ausführenden Zellen weitergeleitet um die entsprechende Funktion zu selektieren. Während die Zellen im "größer/kleiner/gleich"-Fall mindestens 3 Konfigurationsregister benötigen, muß bei der Verwendung von TRIGV-m die Anzahl der Konfigurationsregister mindestens genau dem maximalen Wert von n (max (n)) entsprechen.

### 3.2 Propagieren der benötigten Funktion durch Trigger

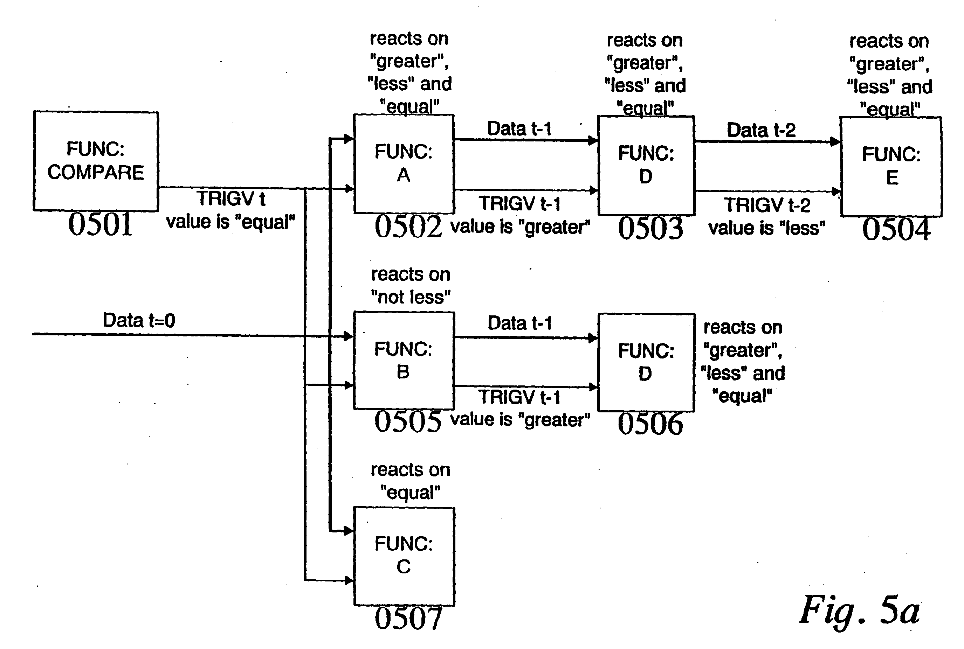

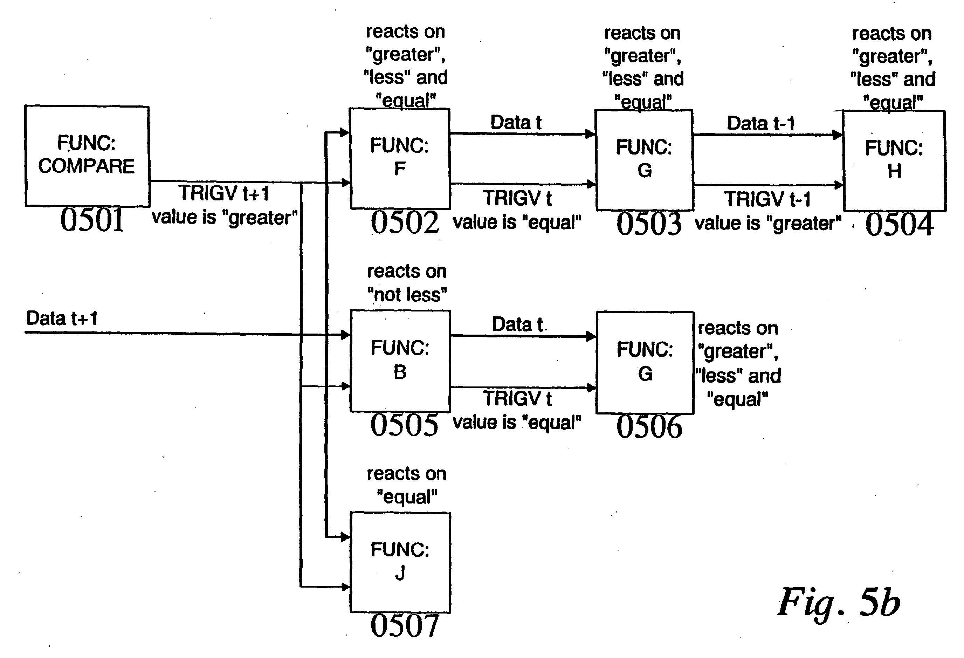

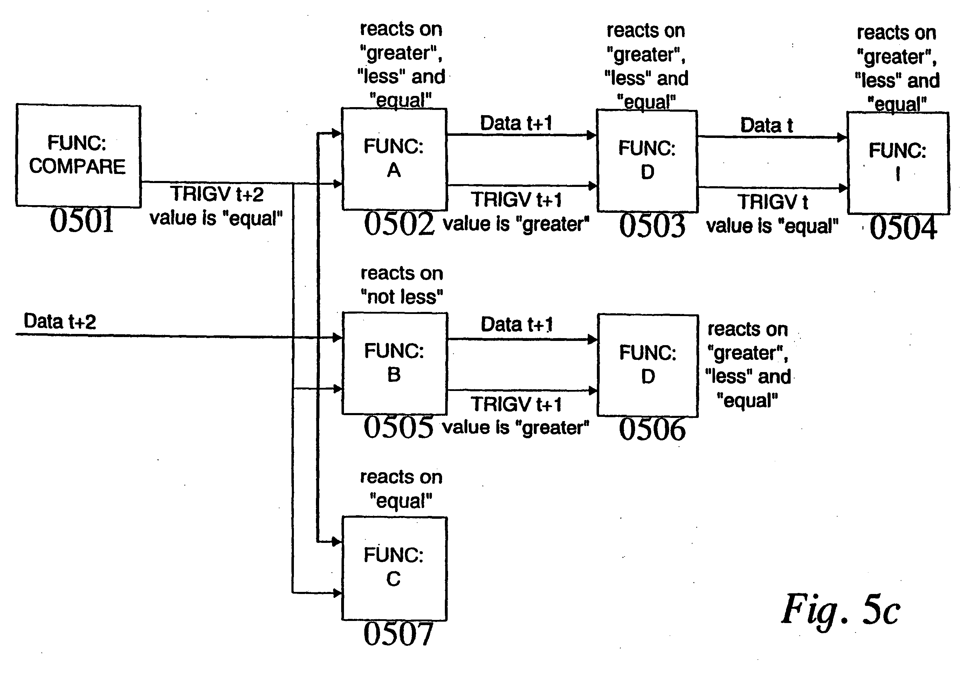

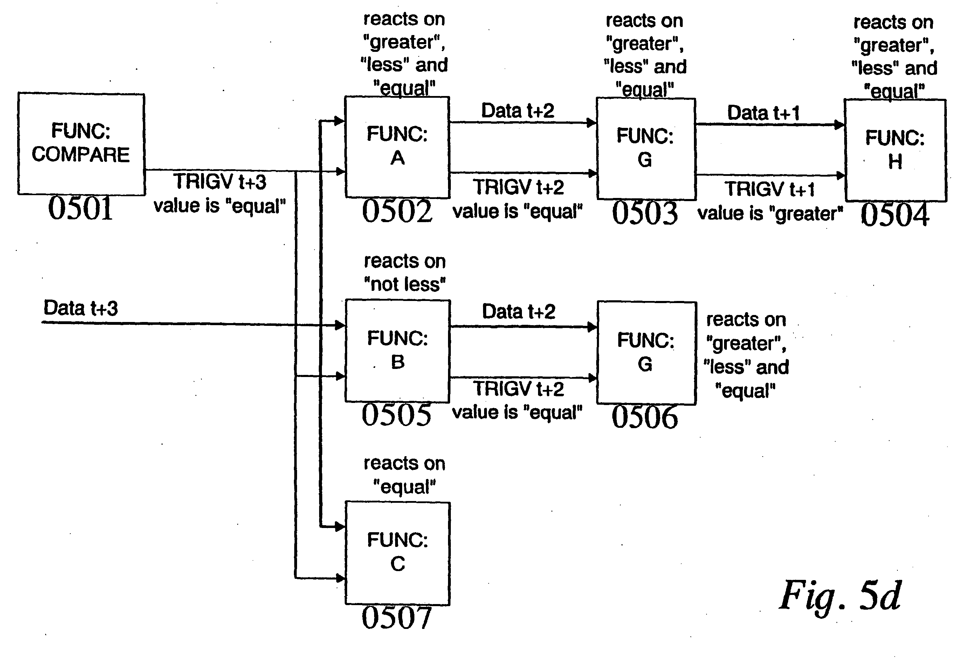

TRIGV/TRIGV-m werden an die erste, die Daten verarbeitende Zelle gesendet. In dieser Zelle werden TRIGV/TRIGV-M ausgewertet und die Daten entsprechend verarbeitet. Zusammen mit den Daten wird TRIGV/TRIGV-m an die nachfolgenden Zellen weitergeleitet (propagiert). Dabei erfolgt eine Weiterleitung an alle Zellen, die aufgrund der Auswertung (IF oder CASE) eine bestimmte Funktion ausführen. Dabei ist die Weiterleitung direkt an die Weiterleitung der Datenpakete gekoppelt, d.h die Weiterleitung erfolgt synchron zu den Daten. Die zum Zeitpunkt t generierten TRIGV/TRIGV-m, werden mit den zum Zeitpunkt t an den ersten verarbeitenden Zellen (CELLS1, vgl. Fig. 5: 0502, 0505, 0507) anstehenden Daten verknüpft.

TRIG/TRIG-V werden so weitergeleitet, daß die Vektoren mit den Daten zum Zeitpunkt t+1 an den zweiten verarbeitenden Zellen anliegen und zum Zeitpunkt t+2 an den dritten verarbeitenden Zellen usw. bis zum Zeitpunkt t+m TRIG/TRIG-V und die Daten an den (m-1)-ten Zellen und gleichzeitig letzten Zellen, die von dem TRIG/TRIG-V auslösendem Vergleich (IF/CASE) abhängig sind, anstehen. Eine Verknüpfung erfolgt keinesfalls so, daß die zum Zeitpunkt t generierten TRIG/TRIG-V mit Daten verknüpft werden, die zu einem Zeitpunkt t_{old}<t an CELLS1 anlagen!

### 3.3 Reagieren auf das Auftreten oder Nicht-Auftreten von Triggern

Es ist in Sonderfällen erforderlich auf das Nicht-Vorhandensein eines Triggers zu reagieren, d.h. ein Triggerzustand tritt auf, jedoch wird keine Änderung des Triggervektors ausgelöst. Auch in diesem Fall kann eine sinnvolle und wichtige Information an die nachfolgenden Zellen übertragen werden. Beispielsweise ist bei einem Vergleich auf "größer", "kleiner", "gleich" das Triggersignal "gleich" nicht vorhanden und ändert sich auch nicht, wenn vom Zustand "kleiner" zum Zustand "größer" übergegangen wird. Dennoch beinhaltet das Nicht-Vorhandensein von "gleich" eine Information, nämlich "ungleich".
Um auf beide Zustände "vorhanden" und "nicht vorhanden" reagieren zu können, wird ein Eintrag in das Konfigurationsregister der Zelle hinzugefügt, das angibt, auf welchen der Zustände reagiert werden soll.
Zudem wird zum Triggervektor TRIGV, der die Zustände "gleich", "größer" und "kleiner" repräsentiert, ein Signal TRIGRDY hinzugefügt, der das Auftreten eines Triggers anzeigt. Dies ist notwendig, da der Zustand "nicht vorhanden" auf einem der Vektoren keinen Aufschluß mehr über das Vorhandensein eines Trigger an sich gibt.
TRIGRDY kann für ein Handshaking-Protokoll zwischen der sendenen und empfangenden Zelle benutzt werden, indem die empfangende Zelle einen TRIGACK generiert, sobald sie die Triggervektoren ausgewertet hat. Erst nach Eintreffen des TRIGACK nimmt die sendende Zelle den Triggerzustand zurück.
Dabei wird anhand eines Eintrages in das Konfigurationsregisters festgelegt, ob bei Aussenden eines Triggervektors auf den Erhalt eines TRIGACK gewartet werden soll, oder ob der Triggerkanal unsynchronisiert abläuft.

### 3.4 Einsatz in Mikroprozessoren

In Mikroprozessoren neuester Architektur werden bedingte Sprünge nicht mehr nach dem bekannten Verfahren der Branch-Prediction, also der Vorhersage eines Sprunges ausgeführt. Die spekulative Vorhersage von Sprüngen, die zur Leistungssteigerung von Prozessoren eingeführt wurde, berechnete Sprünge aufgrund von spekulativen Algorithmen voraus und mußte bei fehlerhaften Berechnungen die gesamte Prozessorpipeline neu laden, was zu erheblichen Leistungsverlusten führte. Um diese Verluste zu eleminieren wurde das neue Predicate/NOP-Verfahren eingeführt. Dabei ist jedem Befehl ein ein Bit breites Status-Flag zugeordnet, das anzeigt, ob der Befehl ausgeführt werden soll - oder nicht. Dabei kann eine beliebige Menge an Statusflags existieren. Die Zuordnung von Befehlen zu Status-Flags geschieht durch einen Compiler während der Übersetzung des Codes. Die Status-Flags werden von den ihnen zugeordneten Vergleichsoperationen zur Ausführungzeit verwaltet und zeigen das Ergebnis des jeweiligen Vergleiches an.

Je nach Zustand des einem Befehl zugeordneten Status-Flag wir der Befehl dann vom Prozessor ausgeführt (sofern das Status-Flag "ausführen" anzeigt) oder der Befehl wird nicht ausgeführt und durch einen NOP ersetzt (sofern das Status-Flag "nicht ausführen" anzeigt). Ein NOP steht für "No OPeration", was bedeutet, daß der Prozessor in diesem Zyklus keine Operation ausführt. Dadurch geht der Zyklus für sinnvolle Operationen verloren.
Zur Optimierung des Zyklusverlustes werden zwei Möglichkeiten vorgeschlagen:

### 3.5.1 Mehrere Befehlsregister pro Recheneinheit

Eine moderner Mikroprozessor besitzt mehrere relativ unabhängige Rechenwerke.
Gemäß dem hier vorgestellten Trigger-Prinzip können die einzelnen Recheneinheiten mit mehreren Befehlsregistern ausgestattet werden, wobei ein Befehlsregister eines Mikroprozessorrechenwerkes synonym für ein Konfigurationsregister, gemäß üblichen FPGA, DFP, o.ä. Bausteinen, steht. Die Auswahl des jeweilig aktiven Befehlsregisters erfolgt
a) anhand von Triggervektoren, die anderen Rechenwerken anhand von Vergleichen generiert wurden.
b) anhand von mehrbittigen Status-Flags (im folgenden Status-Vektoren genannt), die gemäß dem heutigen Verfahren nach dem Stand der Technik, Vergleichsbefehlen zugeordnet sind.

### 3.5.2 Geänderter VLIW-Befehlssatz

Eine besondere Ausgestaltung bietet sich durch VLIW-Befehlssätze. So kann innerhalb eines Befehlswortes mehrere möglichen, von einem Vergleich abhängenden, Befehle zu einem Befehl zusammengefaßt werden. Ein VLIW-Wort beliebiger Breite wird in eine beliebige Menge an Befehlen (Codes) unterteilt.

Jeder einzelne dieser Codes wird durch einen Triggervektor oder Status-Vektor referenziert. Das bedeutet, zur Laufzeit wird einer der vorhandenen Codes aus dem VLIW-Wort ausgewählt und verarbeitet.

In der Tabelle ist ein mögliches VLIW-Wort mit vier Codes abgebildet, auf das ein 2-bittiger Triggervektor oder ein 2-bittiges Statusflag referenziert:

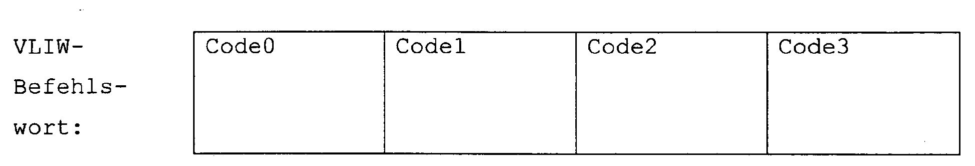

Zuordnung:

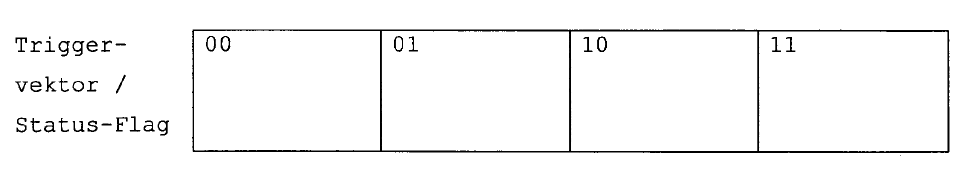

### 4. Erweiterung der Hardware gegenüber üblichen FPGAs und DFPs

### 4.1 Zusätzliche Register

Zu den in DFPs üblichen Konfigurationsregistern kommt ein Statusregister und ein Konfigurationsregister hinzu. Beide Register werden vom PLU-Bus angesteuert und haben Verbindung zur Zustandsmaschine der Ablaufsteuerung der jeweiligen Zelle.

### 4.2 Veränderung des PLU-Busses

In FPGAs und DFPs werden die konfigurierbaren Register M-/F-PLUREG ausschließlich über den PLU-Bus, der die Verbindung zur Ladelogik darstellt, verwaltet. Um die erfindungsgemäße Funktion zu gewährleisten muß nunmehr eine zusätzliche Zugriffsmöglichkeit durch den normalen Systembus zwischen den Zellen möglich sein. Dasselbe gilt für die neuen Status- und Konfigurationsregister.

Dabei ist nur der Teil des Systembusses für die Register relevant, der über die BM-UNIT, also dem Interface zwischen den Systembusse und der PAE, mit der PAE vernetzt ist.
Daher wird der Bus von der BM-UNIT an die Register weitergeleitet, wo vorgeschaltete Multiplexer oder vorgeschaltete Tore die Umschaltung zwischen dem PLU-Bus und dem für die PAE relevanten Systembus übernehmen.
Dabei sind die Multiplexer oder Tore so geschaltet, daß sie immer den für die PAE relevanten Systembus durchschalten, außer nach einem Rücksetzen des Bausteines (RESET) oder wenn der RECONFIG-Trigger aktiv ist.

### 4.3 Erweiterungen der konfigurierbaren Elemente (PAEs) gegenüber üblichen FPGAs und DFPs

### 4.3.1 Triggerquellen

Ein konfigurierbares Element kann Trigger von mehreren Quellen gleichzeitig empfangen. Durch diese Möglichkeit kann mit Hilfe von Maskierungs-Registern eine flexiblere Semantik der Trigger erreicht werden.

### 4.3.2 Mehrere Konfigurationsregister

Anstatt eines Konfigurationsregisters besitzt eine PAE mehrere (max(n)) Konfigurationsregister.

### 4.3.3 Konfigurationsstatemachine und Multiplexer

Den Konfigurationsregistern nachgeschaltet ist ein Multiplexer, der eine der möglichen Konfigurationen auswählt. Die Steuerung des Multiplexers erfolgt durch eine separate oder in die PAE-Statemachine integriert Statemachine, die den Multiplexer anhand eingehender Triggervektoren steuert.

### '4.3.4 Triggerauswertung und Konfiguration

Ein konfigurierbares Element kann ein Maskierungs-Register enthalten, in dem eingestellt werden kann, auf welchen Trigger-Eingängen, ein
Trigger-Signal anliegen muß, so daß die Bedingungen für eine Aktion des konfigurierbaren Elements, erfüllt sind. Ein konfigurierbares Element reagiert nicht nur auf einen Trigger, sondern auf eine eingestellte Kombination aus Triggern. Weiterhin kann ein konfigurierbares Element eine Priorisierung gleichzeitig eingehender Trigger vornehmen.
Eingehende Trigger werden anhand des TRIGRDY-Signals erkannt. Dabei werden die Triggervektoren gemäß zusätzlich in den Konfigurationsregistern vorhandenen Konfigurationsdaten ausgewertet.

### 4.3.5 Triggerhandshake

Sobald die Triggervektoren ausgewertet sind, wird ein TRIGACK zur Bestätigung des Triggervektors generiert.

### 4.3.6 BM-UNIT

Die BM-Unit wird so erweitert, daß sie vom Bus kommende Trigger gemäß der Konfiguration im M-PLUREG an die Sync-Unit und SM-Unit weiterreicht. Von der EALU generierte Trigger (z.B. Vergleicherwerte "größer", "kleiner", "gleich", 0-Detektoren, Vorzeichen, Überträge, Fehlerzustände (Division durch 0, etc.), etc.) werden gemäß der Verschaltungsinformation im M-PLUREG von der BM-UNIT an den Bus weitergeleitet.

### 4.4 Erweiterungen des Systembusses

Der Systembus, also das Bussystem zwischen den Zellen (PAEs), wird dahingehend erweitert, daß zusammen mit den Daten die Informationen über die Zielregister übertragen werden. Das bedeutet, eine Adresse wird mitgeschickt, die beim Datenemfänger das gewünschte Register selektiert.
Ebenfalls wird der Systembus um die unabhängige Übertragung von Triggervektoren und -handshakes erweitert.

### 5. Kurzbeschreibung der Diagramme

Fig. 1 zeigt, wie durch den Einsatz von Triggern ein Schleifenkonstrukt implementiert werden kann.
Fig. 2 zeigt, wie durch den Einsatz mehrerer Trigger ein Vergleichskonstrukt implementiert werden kann.
Fig. 3 zeigt, wie durch den Einsatz mehrerer Trigger und deren Verschachtelung ein Vergleichskonstrukt mit mehreren Ausgängen implementiert werden kann.
Fig. 4 zeigt die notwendigen Erweiterungen gegenüber üblichen FPGAs und DFPs.
Fig. 5 zeigt in einem Funktionsbeispiel die Auswahl verschiedener Funktionen der konfigurierbaren Elemente durch Trigger.
Fig. 6 zeigt die Implementierung von mehreren durch Trigger angesteuerten Konfigurationsregistern zur Ausführung verschiedener Funktionen.
Fig. 7 zeigt die Implementierung des Verfahrens aus Fig. 6 in Mikroprozessoren

### 6. Detailbeschreibung der Diagramme und Ausführungsbeispiele

Figur 1
   Das Makro 0103 soll in diesem Beispiel 70 mal ausgeführt werden. Eine Ausführung des Makros benötigt 26 Taktzyklen. Das bedeutet, daß nur alle 26 Taktzyklen der Zähler 0101 um eins veringert werden darf. Ein Problem bei frei programmierbaren Bausteinen ist nun, daß nicht immer garantiert werden kann, daß auch wirklich nach 26 Takten die Abarbeitung des Makros 0103 abgeschlossen ist. Eine Verzögerung kann zum Beispiel dadurch entstehen, daß ein Makro, welches die Eingangsdaten für Makro 0103 liefern soll, plötzlich 10 Taktzyklen länger benötigt. Aus diesem Grund sendet die Zelle in Makro 0103 ein Trigger Signal an den Zähler 0101, durch welche das Ergebnis der Berechnung an ein weiteres Makro gesandt wird. Gleichzeitig wird die Verarbeitung des Makros 0103 durch die gleiche Zelle gestoppt. Diese Zelle 'weis' genau, daß die Bedingung für die Beendigung einer Berechnung erreicht wurde.
   Das gesendete Trigger-Signal ist in diesem Fall ein STEP-Trigger, welcher veranlaßt, daß der Zähler 0101 einmal seine konfigurierte Funktion ausführt. Der Zähler zählt seinen Zählerwert um eine herunter und vergleicht, ob er den Wert 0 erreicht hat. Ist dies nicht der Fall, wird ein GO-Trigger an das Makro 0103 abgeschickt. Dieses GO-Trigger-Signal veranlaßt das Makro 0103 seine Funktion wieder aufzunehmen.
   Dieser Vorgang wiederholt sich solange, bis der Zähler 0101 den Wert 0 erreicht hat. In diesem Fall wird ein Trigger-Signal an das Makro 0102 geschickt und lößt dort eine Funktion aus.
   Durch dieses Zusammenspiel von Triggern kann eine sehr feingranulare Synchronisation erreicht werden.
Figur 2

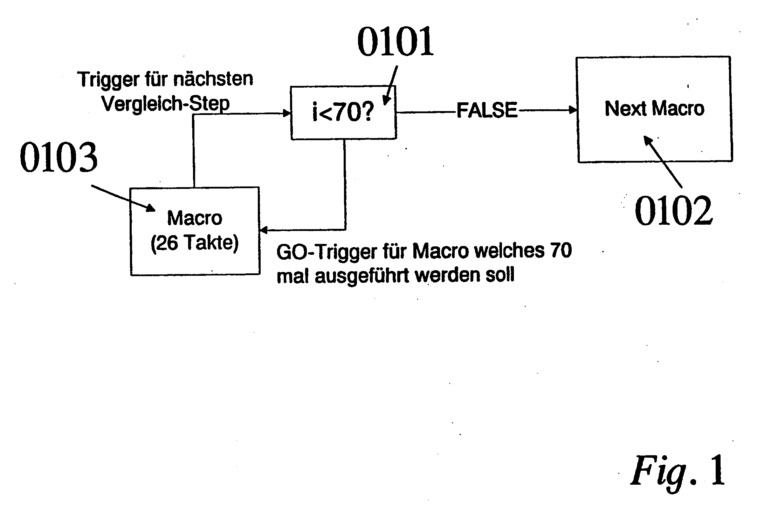

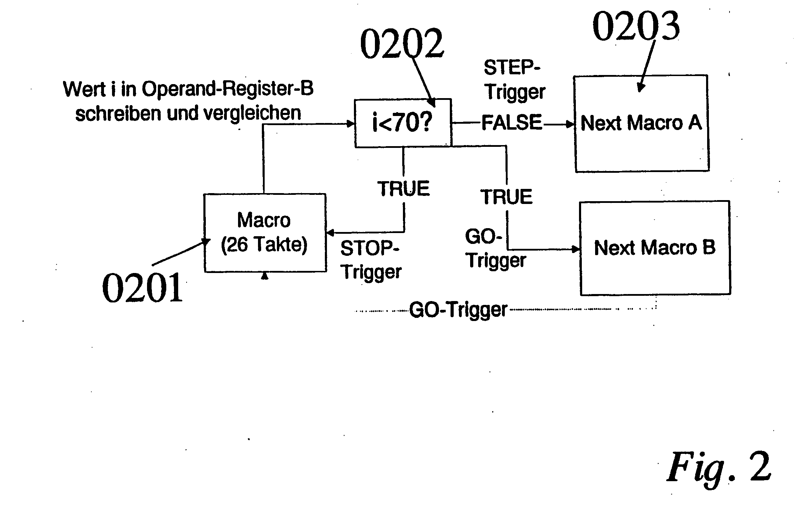

   Figur 2 entspricht der Grundidee her Figur 1. Die Funktion in Element 0202 ist diesesmal jedoch kein Zähler sondern ein Vergleicher. Das Makro 0201 schickt nach jedem Verarbeitungsdurchlauf einen Verleichswert mit an den Vergleicher 0202. Je nach Ausgang des Vergleichs, werden wiederum verschiedene Trigger angesteuert um zum Beispiel eine Aktion in den Makros 0203 zu veranlassen. Das in Figur 2 implementierte Konstrukt entspricht dem einer IF-Abfrage in einer Progammiersprache.
Figur 3
   Wie in Figur 2 werden hier mehrere Vergleicher 0301, 0302 eingesetzt, um die Konstruktion eines IF-ELSE-ELSE Konstruktes (oder einer Mehrfachauswahl) zu implementieren. Durch die Verwendung verschiedentster Arten von Triggern und Verbindungen dieser Trigger zu den Makros 0303, 0304 können sehr komplexe Abläufe einfach implementiert werden.
Figur 4
   zeigt die Unterschiede zu üblichen FPGAs und DFPs. Das hinzugefügte Konfigurationsregister (0401) und das hinzugefügte Statusregister (0402) haben über den Bus (0407) Verbindung zur SM-UNIT. Die Register 0401, 0402, F- und M-PLUREG sind über einen internen Bus 0206 mit einem Tor 0403 verbunden. Dieses verbindet den internen Bus (0406) je nach Stellung mit dem PLU-Bus 0405 um eine Konfiguration durch die PLU zu ermöglichen oder über einen Bus 0408 mit dem BM-UNIT. Diese schaltet je nach Adressierung auf dem Datenbus 0404 die Daten zu den O-REG weiter oder zu dem adressierten Register 0401, 0402, F- oder M-PLUREG.
   Die BM-UNIT (0411) sendet über 0415 Triggersignale an die SYNC-UNIT (0412). Von der EALU erhält 0411 über 0414 Ergebnisse ("gleich", "größer", "kleiner", "Ergebnis = 0", "Ergebnis positiv", "Ergebnis negativ", Überlauf (positiv und negativ), etc.) um diese in Triggervektoren umzuwandeln. Alternativ können von der SYNC-UNIT oder STATE-MACHINE generierte Zustände über 0415 an die BM-UNIT übermittelt werden.
   Die von der BM-UNIT an den Bus (0404) übertragenen Triggersignale können je nach Konfiguration der auswertenden konfigurierbaren Elemente dort als STEP/STOP/GO-, RECONFIG-Trigger oder zur Auswahl eines Konfigurationsregisters verwendet werden. Welche Funktion ein generierter Trigger bei den auswertenden konfigurierbaren Elementen erfüllt, wird durch die Vernetzung (0404) und die Konfiguration der jeweiligen konfigurierbaren Elemente bestimmt. Ein und derselbe Trigger kann bei verschiedenen konfigurierbaren Elementen unterschiedliche Funktion haben. 0416 ist der Ergebnisausgang von R-REGsft zum Bussystem 0404 und den nachfolgenden konfigurierbaren Elementen.
Figur 5
   In Figur 5 ist das zeitliche Verhalten zwischen generierten Triggern und den durch die Trigger selektierten Konfigurationsregistern beispielsweise aufgezeigt. 0501 generiert durch einen Vergleich den Triggervektor TRIGV, der die Werte "equal" (gleich), "greater" (größer) oder "less" (kleiner) annehmen kann. Die konfigurierbaren Elemente 0502-0504 verarbeiten Daten abhängig vom Vergleich (0501). Dabei ist die Verarbeitung von den Vergleichswerten "equal", "greater" und "less" abhängig. Die Verarbeitung ist gepipelinet, das heißt, ein Datenwort wird nacheinander von 0502, dann von 0503 und zuletzt von 0504 modifiziert.
   0505 verarbeitet ebenfalls Daten in Abhängigkeit von 0501. Dabei beschränkt sich die Abhängigkeit allerdings auf die Vergleichswerte "less". "greater" UND "equal" bewirken die gleiche Funktionsausführung. Es werden also die Werte "kleiner" und "größer oder gleich" unterschieden. 0506 ist in der Pipeline 0505 nachgeschaltet. Dabei reagiert 0506 auf "equal", "greater" und "less" unterschiedlich (vgl. 0503). 0507 ist ebenfalls von 0501 abhängig, jedoch werden die Werte "gleich" und "ungleich (kleiner oder größer)" unterschieden. Das Ausführungsbeispiel beginnt bei dem Zeitpunkt t (Fig. 5a) und endet am Zeitpunkt (t+3). Durchlaufen Daten eine der Pipelines (0502, 0503, 0504 bzw. 0505, 0606) werden sie bei jeder Ausführung in einer der Makros (0502-0506) um einen Taktzyklus verzögert. Längere und ins besondere unterschiedliche Verzögerungen können ebenfalls auftreten. Da zwischen den Daten und Triggersignalen ein Handshakemechanismus zur automatischen Synchronisation (gemäß dem Stand der Technik, bzw. dieser Schrift (TRIGACK/TRIGRDY)) besteht, muß auf diesen Fall nicht gesondert eingegangen werden. Durch die Verzögerungen stehen zum Zeitpunkt t beispielsweise zwischen der zweiten und dritten Pipelinestufe die Daten und Triggersignale des früheren Zeitpunktes t-2 an. Von Fig. 5a bis Fig 5d ist der Ablauf von 3 Taktzyklen (t bis t+2) dargestellt.

Die von 0501 generierten Triggervektoren (also die Vergleichsergebnisse) sehen über t betrachtet wie folgt aus:

| Zeit t | Vergleichsergebnis |
|---|---|
| t-2 | less, kleiner |
| t-1 | greater, größer |
| t | equal, gleich |
| t+1 | greater, größer |
| t+2 | equal, gleich |

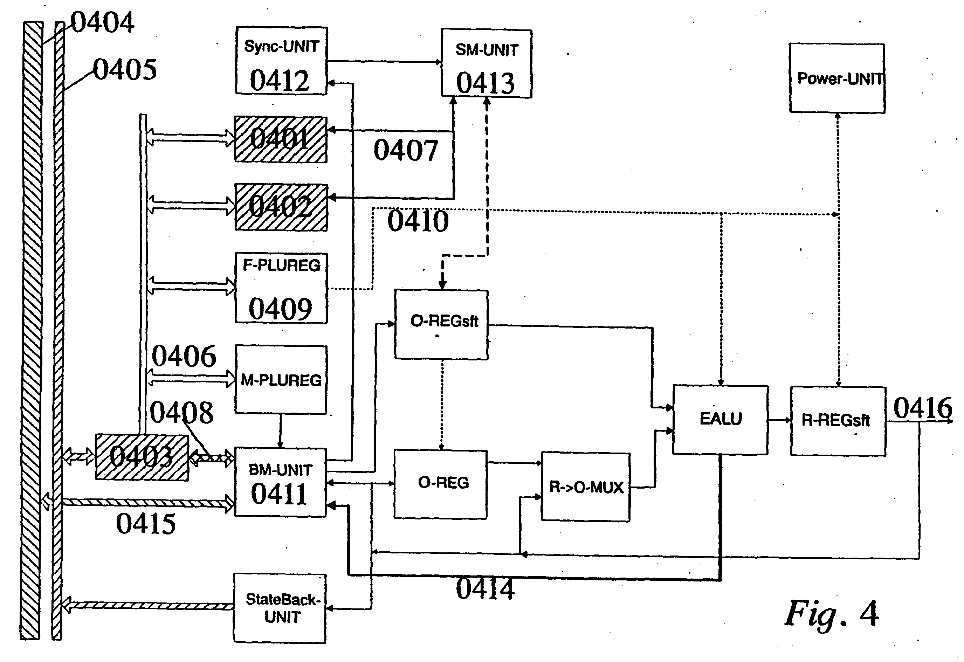

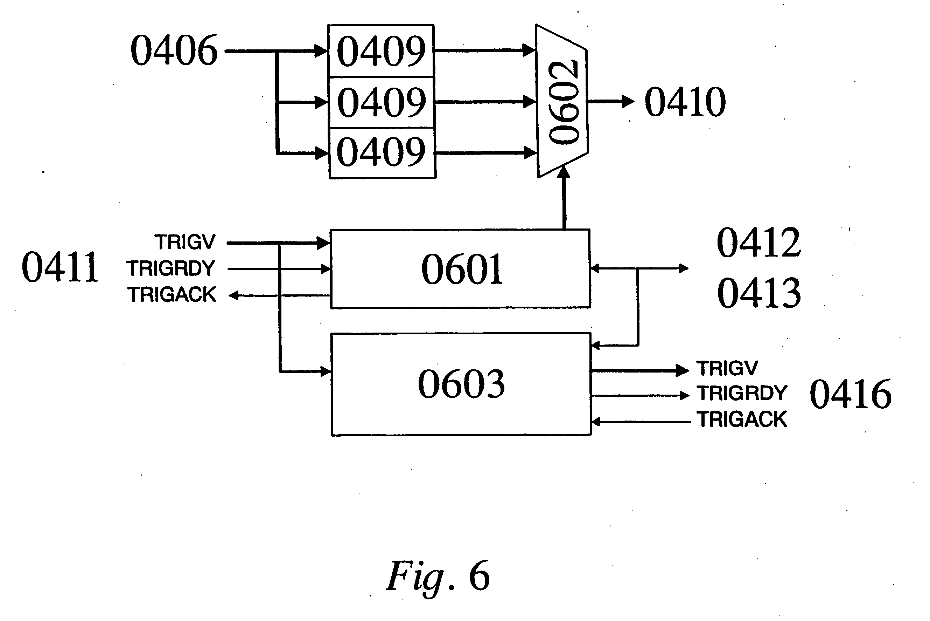

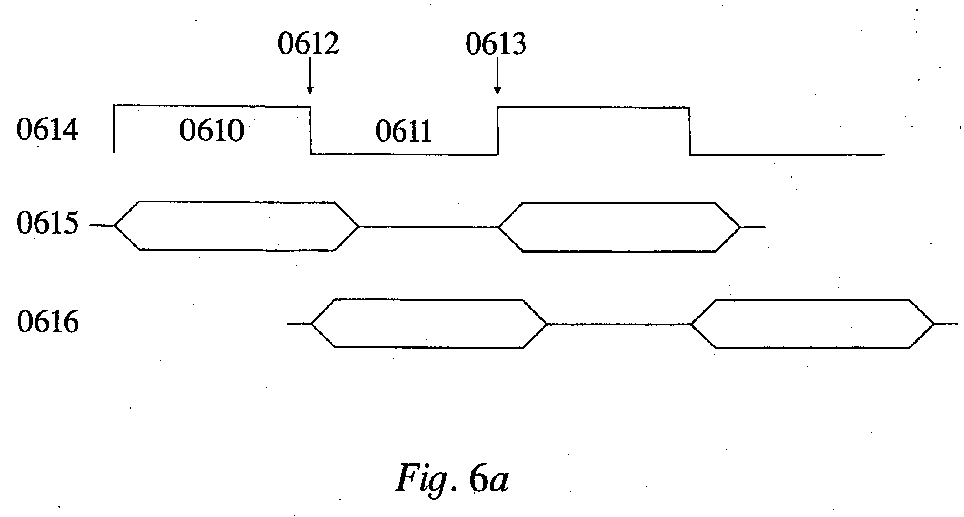

In Figur 6 ist die Integration mehrerer Konfigurationsregister-in ein konfigurierbares Element dargestellt. In diesem Ausführungsbeispiel existieren drei Konfigurationsregister (0409) nach Fig. 4. Diese werden über den Bus 0406 konfiguriert. Über das Bussystem 0411 erhält eine Steuereinheit (0601) (die auch als Statemachine ausgestaltet werden kann) die Signale TRIGV und TRIGRDY. Die Steuereinheit schaltet gemäß TRIGV eines der Konfigurationsregister über den Multiplexer (0602) auf das Bussystem 0410, das zu den Steuermechanismen des konfigurierbaren Elementes führt. Zur Synchronisation der Triggersignale mit den internen Abläufen des konfigurierbaren Elementes besitzt 0601 einen Synchronisationsausgang, der an die Synchronisationseinheit (0412) oder die Statemachine (0413) führt. Zur Synchronisation der Triggerquellen generiert 0601 das Handshakesignal TRIGACK nach Verarbeitung des eingegangenen Triggers.

In dem Ausführungsbeispiel ist jedes der Konfigurationsregister (0409) einem TRIGV vom Typ ("equal", "greater", "less") zugeordnet. Werden bei jedem der Triggertypen andere Operationen ausgeführt, so ist jedes der Konfigurationsregister unterschiedlich belegt. Wird beispielsweise nur aus "equal" und "not equal" unterschieden, sind die Konfigurationsregister für die Typen "less" und "greater" gleich belegt, nämlich mit der Konfiguration für "not equal". Das Konfigurationsregister für "equal" besitzt eine andere Belegung. Das bedeutet, anhand der Belegung der Konfigurationsregister kann der Vergleich genauer spezifiziert werden, wobei jedes konfigurierbare Element diese Spezifizierung unterschiedlich gestalten kann. Über das Register 0603 wird TRIGV zusammen mit dem Ergebnis an die nachfolgenden konfigurierbaren Elemente weitergeleitet um ein Pipelining gem. Fig. 5a-d zu ermöglichen. Das Register und die Handshakesignale werden von 0412 oder.0413 gesteuert. Die Triggerinformation kann zusammen mit dem Ergebnis aus dem R-REGsft oder zeitversetzt, also vor dem Ergebnis, über das Interface 0416 an die nachfolgenden konfigurierbaren Elemente übertragen werden.
Eine zeitversetzte Übertragung bietet den Vorteil, daß keine zusätzliche Zeit zum Einstellen der Konfigurationsregister in den nachfolgenden konfigurierbaren Elementen erforderlich ist, da die Einstellung bereits vor Erhalt der Daten (zeitgleich mit dem Freigeben des Ergebnisses) erfolgt. Ein entsprechendes Timing (bezogen auf bezogen auf DFP übliche Abläufe) ist in Fig. 6a dargestellt. Die Triggervektoren (0615) werden mit der steigenden Flanke (0613) des Bausteintaktes (0614) generiert. Mit der fallenden Flanke (0612) werden die Trigger in den konfigurierbaren Elementen ausgewertet. Die Daten laufen phasenverschoben, d.h. sie werden bei 0612 freigegeben und mit 0613 eingelesen. Während 0610 werden die Triggervektoren über den Bus übertragen und die Daten berechnet. Während 0611 werden die Daten über den Bus übertragen und die Trigger berechnet, bzw. die Konfigurationsregister der konfigurierbaren Elemente gemäß den bei 0613 gespeicherten Daten ausgewählt und die Konfiguration entsprechend eingestellt.

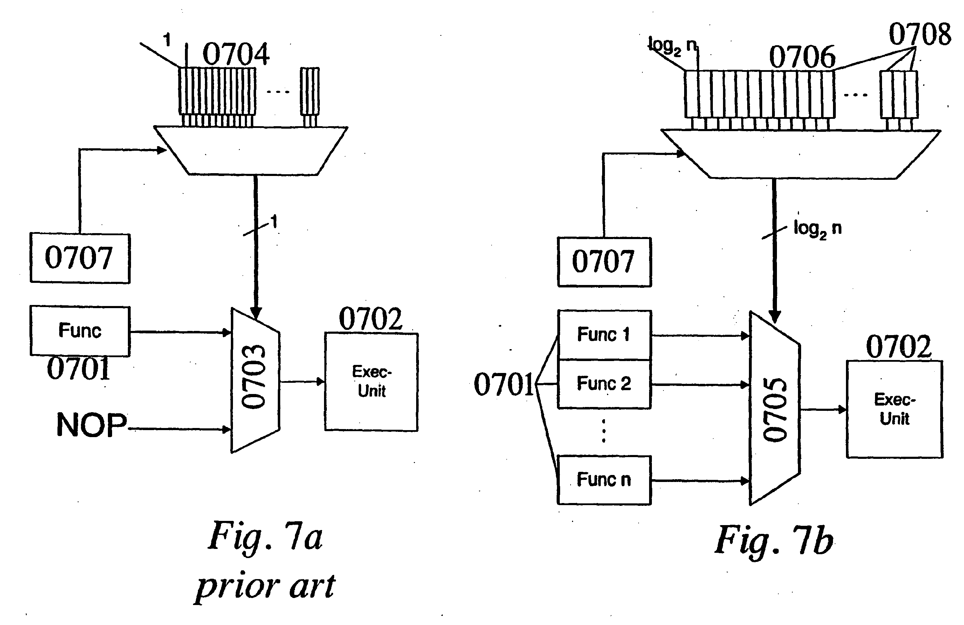

Figur 7a zeigt die Verwaltung von Sprüngen nach dem Predicate/NOP-Verfahren gemäß dem Stand der Technik. Beim Ausführen eines Vergleiches wird ein Eintrag im Predicate-Register (0704) gesetzt. Dieser Eintrag wird während der Ausführung von Befehlen abgefragt und legt fest, ob ein Befehl ausgeführt wird (der Befehl innerhalb der von dem bedingten Sprung angesprochenen Codesequenz liegt), oder durch einen NOP ersetzt wird (der Befehl liegt in einer anderen als der durch den bedingten Sprung angesprochenen Codesequenz). Der Befehl steht dabei in dem Befehlsregister 0701. Das Predicate-Register enthält eine Mehrzahl von Einträgen, die einer Mehrzahl von Operationen und/oder einer Mehrzahl von Rechenwerken zugeordnet sind. Diese Zuordnung wird zur Compile-Zeit des Programmes vom Compiler vergeben. Die Zuordnungsinformation (0707) wird dem Befehl, der in das Befehlsregister eingetragen wird zugeordnet, so daß ein eindeutiger Eintrag durch den jeweiligen Befehl referenziert wird. Durch 0703 wird ausgewählt ob der Befehl aus 0701 oder ein NOP ausgeführt wird. Bei der Ausführung eines NOPs geht ein Taktzyklus verloren. 0703 hat dabei symbolischen Charakter, da prinzipiell auch die Ausführungseinheit (0702) direkt von 0704 angesteuert werden könnte.

In Figur 7b existieren n Befehlsregister (0701: Func 1 ... Func n).
Bei der Ausführung eines Vergleiches / bedingten Sprunges wird das zu adressierende Befehlsregister, also das Ergebnis des Vergleiches, als Eintrag (0708) in dem Predicate-Register 0706 abgelegt, wobei 0706 aus einer Mehrzahl solcher Einträge besteht. Der jeweilige Eintrag (0708) in 0706 ist dabei so breit, daß alle möglichen Befehlsregister einer Ausführungseinheit (0702) durch ihn adressiert werden können, das bedeutet, bei Befehlsregistern ist die Eintragsbreite log₂(n). Das Predicate-Register enthält eine Mehrzahl von Einträgen, die einer Mehrzahl von Operationen und/oder einer Mehrzahl von Rechenwerken zugeordnet sind. Diese Zuordnung wird zur Compile-Zeit des Programmes vom Compiler vergeben. Die Zuordnungsinformation (0707) wird der Menge an Befehlen, die in die Befehlsregister eingetragen wird zugeordnet, so daß ein eindeutiger Eintrag durch die jeweilige Befehle referenziert wird.
Über den Multiplexer wird ausgewählt, welches Befehlsregister den Code für die momentane Ausführung liefert.
Durch diese Technik wird bei bedingten Sprüngen auch im ungünstigsten Fall anstatt eines NOPs ein gültiger Befehl ausgeführt, wodurch kein Taktzyklus verschwendet wird.

**Vorstehend beschrieben wurde somit unter anderem** ein Verfahren zur Synchronisation sowohl der Ablaufsteuerung der Datenverarbeitung in konfigurierbaren Elementen, als auch deren Umkonfiguration, in Bausteinen mit zwei- oder mehrdimensionaler programmierbarer Zellstruktur (DFP, FPGA, DPGA, RAW-Machines), wobei ein konfigurierbares Bussystem die Elemente miteinander verbindet, als auch der Ablaufsteuerung der Datenverarbeitung in üblichen, auf Rechenwerken aufgebauten Mikroprozessoren, Digitalen Signalprozessoren und Mikrokontrollern, durch bedingte Sprünge, wobei ein Bussystem die Rechenwerke miteinander verbindet, **wobei vorgesehen ist**, daß Synchronisationssignale während der Verarbeitung von den verarbeitenden konfigurierbaren Elementen durch Vergleiche der Daten, Vorzeichen von Zahlen, Überträge von arithmetischen Operationen, Fehlerzuständen, u. dgl. (0202), generiert wer- .

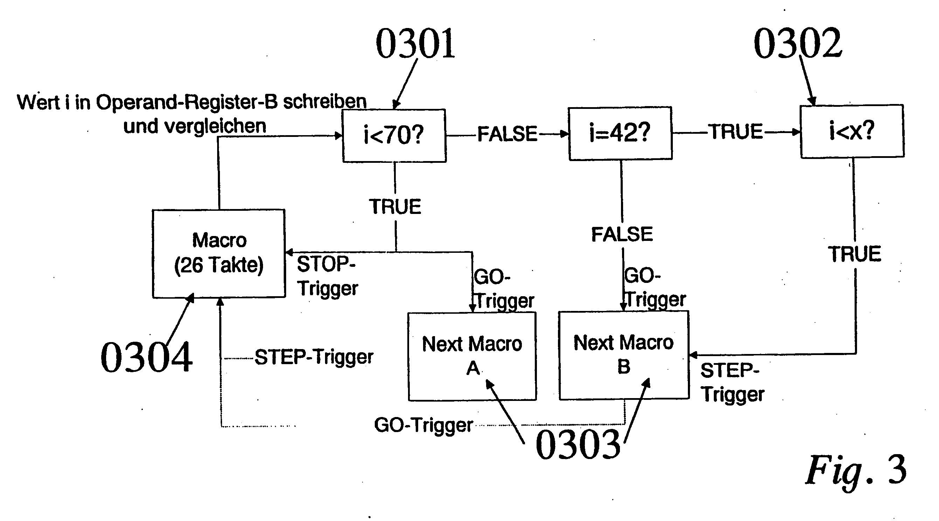

Operationen, Fehlerzuständen, u. dgl. (0202), generiert werden und an weitere Elemente (0201, 0203) über das Bussystem gesandt werden, wobei die empfangenden Elemente die Information zur Synchronisation der Datenverarbeitung und Steuerung des Ablaufes der Datenverarbeitung verwenden (Fig. 1-3).

**Weiter ist in diesem Verfahren bevorzugt vorgesehen,** daß bei der Synchronisation durch einen Trigger ein konfigurierbares Element oder Rechenwerk zur Ausführung einer einzigen Operation angeregt werden kann (STEP-Trigger, Fig. 2).

**Auch ist in diesem Verfahren bevorzugt möglich,** daß bei der Synchronisation durch einen Trigger ein konfigurierbares Element oder Rechenwerk zur Ausführung einer Vielzahl Operation angeregt werden kann (GO-Trigger, Fig. 2).

**Insbesondere ist auch als möglich vorgesehen**, daß bei der Synchronisation durch einen Trigger die Ausführung eines konfigurierbaren Elements oder Rechenwerk angehalten werden kann (STOP-Trigger, Fig. 2).

**Es ist alternativ und/oder zusätzlich möglich**, daß bei der Synchronisation durch einen Trigger ein konfigurierbares Element zur Umkonfiguration freigegeben werden kann (Fig. 6).

**Weiter wurde vorstehend unter anderem auch ein Verfahren** beschrieben, daß das konfigurierbare Element oder Rechenwerk seinen momentanen Status in einem Statusregister (0402) anzeigt.

**Weiterhin ist hierbei als Möglichkeit vorgesehen,** daß die Synchronisationssignale zum Empfänger der Daten, zum Sender der Daten oder zu einem unabhängigen konfigurierbaren Element oder Rechenwerk übertragen werden (Fig. 1-3).

**Auch kann hierbei besonders bevorzugt vorgesehen sein,** daß die Übertragung der Synchronisationssignale gesperrt werden kann.

**Insbesondere ist hierbei als bevorzugt möglich,** daß unterschiedliche Synchronisationssignale wahlweise übertragen werden (Vergleich, Fehlerzustände, etc.), wobei die Art des Synchronistaionssignales frei in der generierenden Einheit wählbar ist und die Auswirkung der Synchronisationssignale frei in der empfangenden Einheit wählbar ist (Fig. 5).

**Weiter wurde hierbei als bevorzugt möglich vorgesehen,** daß ein Synchronisationssignal an mehrere Empfänger übertragen werden kann (0501).

**Weiterhin ist hierbei als insbesondere bevorzugt möglich vorgesehen,** daß einem Synchronisationssignal eine Quittierungsleitung zugeordnet ist (Fig. 6: TRIGACK).

**Weiter ist bei diesem Verfahren vorgesehen,** daß ein Synchronisationsvektor aus einem oder einer Mehrzahl von Synchronisationssignalen aufgebaut ist (Fig. 6: TRIGV).

**Insbesondere ist hierbei als bevorzugt möglich,** daß ein Konfigurationsregister aus einer Mehrzahl von Konfigurationsregistern durch einen Synchronisationsvektor ausgewählt wird; bzw. ein Befehlsregister aus einer Mehrzahl von Befehlsregistern ausgewählt wird (Fig. 7b).

**Weiter wurde hier als bevorzugt möglich vorgesehen,** daß der Auswahlvorgang eines Registers durch Synchronisationssignale so mit der Datenverarbeitung synchronisiert wird, daß kein Takzyklus verlorengeht (Fig. 6).

**Weiterhin ist hierbei als insbesondere bevorzugt möglich vorgesehen,** daß in einem einer Operation zugeordneten Register, ausgewählt aus einer Mehrzahl an Registern, der Wert des generierten Synchronisationssignals so gespeichert wird, daß eine andere zugeordnete Operation selektiv darauf zugreifen kann und anhand der Information einen möglichen und gültigen Befehl, bzw. eine mögliche und gültige Konfiguration, aus einer Mehrzahl von Befehlen/Konfigurationen auswählt.

**Weiter wurde vorstehend unter anderem ein** Verfahren zur Synchronisation sowohl der Ablaufsteuerung der Datenverarbeitung in konfigurierbaren Elementen, als auch deren Umkonfiguration, in Bausteinen mit zwei- oder mehrdimensionaler programmierbarer Zellstruktur (DFP, FPGA, DPGA, RAW-Machines), wobei ein konfigurierbares Bussystem die Elemente miteinander verbindet, als auch der Ablaufsteuerung der Datenverarbeitung in üblichen, auf Rechenwerken aufgebauten Mikroprozessoren, Digitalen Signalprozessoren und Mikrokontrollern, durch bedingte Sprünge, wobei ein Bussystem die Rechenwerke miteinander verbindet, **wobei vorgesehen ist,** daß anhand entsprechender Befehle Konfigurationswörter innerhalb eines konfigurierbaren Elementes oder Rechenwerkes generiert werden und über den Datenbus zusammen mit der Adresse des anzusprechenden Registers an ein weiteres konfigurierbares Element oder Rechenwerk übertragen werden, das die übertragenen Konfigurationswörter in das adressierte Register schreibt (Seite 2-5).

**Es ist hierbei weiter als Möglichkeit vorgesehen,** daß das konfigurierbare Element oder Rechenwerk seinen momentanen Status in einem Statusregister (0402) anzeigt.

**Weiter wurde hierbei als bevorzugt möglich vorgesehen,** daß die Angabe der anzusteuernden Register in Befehlen kodiert ist und über den Datenbus übertragen wird (Seite 4, unten).

**Weiterhin ist hierbei insbesondere bevorzugt möglich,** daß in einem einer Operation zugeordneten Register, ausgewählt aus einer Mehrzahl an Registern, der Wert des generierten Synchronisationssignals so gespeichert wird, daß eine andere zugeordnete Operation selektiv darauf zugreifen kann und anhand der Information einen möglichen und gültigen Befehl, bzw. eine mögliche und gültige Konfiguration, aus einer Mehrzahl von Befehlen/Konfigurationen auswählt.

**Weiterhin wurde vorstehend auch beschrieben**, ein Verfahren zur Synchronisation sowohl der Ablaufsteuerung der Datenverarbeitung in konfigurierbaren Elementen, als auch deren Umkonfiguration, in Bausteinen mit zwei- oder mehrdimensionaler programmierbarer Zellstruktur (DFP, FPGA, DPGA, RAW-Machines), wobei ein konfigurierbares Bussystem die Elemente miteinander verbindet, sowie der Ablaufsteuerung der Datenverarbeitung in üblichen, auf Rechenwerken aufgebauten Mikroprozessoren, Digitalen Signalprozessoren und Mikrokontrollern, durch bedingte Sprünge, wobei ein Bussystem die Rechenwerke miteinander verbindet, **wobei vorgesehen ist,** daß zur Laufzeit anhand von Synchronisationssignalen eine gültige Konfiguration der konfigurierbaren Elemente aus einer Mehrzahl an Konfigurationen oder ein gültiger Befehl aus mehreren ein gültiger Befehl aus mehreren möglichen Befehlen eines Rechenwerkes ausgewählt wird (Fig. 7b).

**Insbesondere ist hierbei als bevorzugt möglich,** daß das konfigurierbare Element oder Rechenwerk seinen momentanen Status in einem Statusregister (0402) anzeigt.

**Weiter wurde hierbei als bevorzugt möglich vorgesehen,** daß die Synchronisationssignale zum Empfänger der Daten, zum Sender der Daten oder zu einem unabhängigen konfigurierbaren Element oder Rechenwerk übertragen werden (Fig. 1-3).

**Auch kann hierbei bevorzugt vorgesehen sein,** daß die Übertragung der Synchronisationssignale gesperrt werden kann.

**Weiter ist bei diesem Verfahren bevorzugt vorgesehen**, daß unterschiedliche Synchronisationssignale wahlweise übertragen werden (Vergleich, Fehlerzustände, etc.), wobei die Art des Synchronistaionssignales frei in der generierenden Einheit wählbar ist und die Auswirkung der Synchronisationssignale frei in der empfangenden Einheit wählbar ist (Fig. 5).

**Auch ist es bei diesem Verfahren bevorzugt möglich,** daß ein Synchronisationssignal an mehrere Empfänger übertragen werden kann (0501).

**Insbesondere ist auch als möglich vorgesehen,** daß einem Synchronisationssignal eine Quittierungsleitung zugeordnet ist (Fig. 6, TRIGACK).

**Weiterhin ist hierbei als Möglichkeit vorgesehen**, daß ein Synchronisationsvektor aus einem oder einer Mehrzahl von Synchronisationssignalen aufgebaut ist (Fig. 6, TRIGV).

**Insbesondere ist hierbei als bevorzugt möglich,** daß der Auswahlvorgang eines Registers durch Synchronisationssignale so mit der Datenverarbeitung synchronisiert wird, daß kein Takzyklus verlorengeht (Fig. 6).

**Weiter wurde hierbei als bevorzugt möglich vorgesehen,** daß in einem einer Operation zugeordneten Register, ausgewählt aus einer Mehrzahl an Registern, der Wert des generierten Synchronisationssignals so gespeichert wird, daß eine andere zugeordnete Operation selektiv darauf zugreifen kann und anhand der Information einen möglichen und gültigen Befehl, bzw. eine mögliche und gültige Konfiguration, aus einer Mehrzahl von Befehlen/Konfigurationen auswählt.

## Patentansprüche

1. Verfahren zur Synchronisation der Datenverarbeitung zur Laufzeit konfigurierbarer, datenverarbeitender Elemente einer zur Laufzeit rekonfigurierbaren Zellarchitektur mit den Schritten, dass zumindest einige der Elemente konfiguriert werden, ein in einer Zelle erzeugtes Triggersignal zur Laufzeit zu einer Anzahl konfigurierter Elemente innerhalb der Zellarchitektur übertragen wird, das Triggersignal von der Anzahl der Elemente empfangen wird und im Ansprechen auf den Triggerempfang anhand dessen die Ausführung einer Konfiguration zur Datenverarbeitung bestimmt wird.

2. Verfahren nach dem vorhergehenden Anspruch, **dadurch gekennzeichnet, dass** die Konfiguration im Ansprechen auf den Triggereingang die Datenverarbeitung verzögert, sofort und/oder mehrfach ausgeführt wird.

3. Verfahren nach einem der vorhergehenden Ansprüche, **dadurch gekennzeichnet, dass** zumindest einige der Elemente durch Einschreiben einer Mehrzahl von Konfigurationen in Konfigurationsregister vorkonfiguriert werden, ein in einer Zelle erzeugtes Triggersignal zu einer Anzahl vorkonfigurierter Elemente innerhalb der Zellarchitektur zur Laufzeit übertragen wird, das Triggersignal von der Anzahl Elemente empfangen wird und anhand dessen eine gültige Konfiguration aus der Mehrzahl von in den Konfigurationsregistern vorab abgelegten Konfigurationen ausgewählt wird und Daten von zumindest einem vorkonfigurierten Element der Anzahl gemäß seiner aus der Vorkonfiguration ausgewählten gültigen Konfiguration verarbeitet werden.

4. Verfahren zur Synchronisation nach Anspruch 1 mit dem Schritt, dass ein Triggervektor erzeugt wird und ein triggervektorbezogenes Signal übertragen wird, um die Datenverarbeitung zu synchronisieren.

5. Verfahren nach einem der vorhergehenden Ansprüche, **dadurch gekennzeichnet, dass** das Triggersignal gemäß einer vorkonfigurierten Vernetzung übertragen wird.

6. Verfahren nach einem der vorhergehenden Ansprüche, **dadurch gekennzeichnet, dass** sequenziell eine Rekonfiguration von Elementen der Anzahl als eine Funktion des empfangenen Triggers ausgelöst wird.

7. Verfahren nach einem der vorhergehenden Ansprüche, **dadurch gekennzeichnet, dass** Daten entlang eines vorkonfigurierten Weges propagiert werden, ein Triggersignal entlang eines vorkonfigurierten Weges propagiert wird und eine Rekonfiguration ausgelöst wird als Funktion der Triggerpropagation.

8. Verfahren nach einem der vorhergehenden Ansprüche, worin die Datenverarbeitung im Ansprechen auf die Abwesenheit eines Triggersignals erfolgt.
